Europäisches Patentamt

(19) European Patent Office

Office européen des brevets

(11) Publication number: **0 326 376 B1**

# EUROPEAN PATENT SPECIFICATION

(12)

(45) Date of publication of patent specification :
30.10.91 Bulletin 91/44

(51) Int. Cl.⁵ : **F04B 49/00, F16K 7/20**

(21) Application number : **89300740.1**

(22) Date of filing : **26.01.89**

(54) Hydraulic pump unloader means.

(30) Priority : **27.01.88 GB 8801803**

(43) Date of publication of application :
**02.08.89 Bulletin 89/31**

(45) Publication of the grant of the patent :
**30.10.91 Bulletin 91/44**

(84) Designated Contracting States :
**DE FR GB IT SE**

(56) References cited :
**DE-C- 882 637**
**DE-C- 883 373**
**FR-A- 1 490 427**
**US-A- 2 594 132**

(73) Proprietor : **WABCO AUTOMOTIVE U.K.**
**LIMITED**
**90 Newbold Road**
**Rugby, Warwickshire, CV21 2NL (GB)**

(72) Inventor : **McCullagh, Michael Gerard**
**76 Hawthorn Road**
**Reepham Lincoln, LN3 4DU (GB)**

(74) Representative : **Hartley, David et al**
**Withers & Rogers 4 Dyer's Buildings Holborn**
**London, EC1N 2JT (GB)**

## Description

The invention relates to an unloader, more particularly an unloader for controlling the fluid output of a hydraulic pump in a constant pressure type circuit, particularly as used in power hydraulic braking systems for motor vehicles. In such systems the pump output is used to fill hydraulic accumulators with pressurised fluid which is, in turn, used for operational duties such as applying the brakes under the command of the brake pedal. When the accumulators are filled with pressurised fluid the pump delivery must be temporarily halted or by-passed and when topping up of accumulator fluid is required the delivery must be recommenced. A device for this purpose is called the pump unloader and there are basically three types :

a) to stop rotation of the pump, this would be a clutch device if engine driven, or a switch if motor driven, the command device is usually a pressure rather than volume sensor.

b) to by-pass the unwanted delivery back to reservoir via control valve.

c) to stop delivery by closing the pump inlet or suction port.

U.K.-A-1300278 discloses a typical pump layout using an unloader of type c (above). It is a dual output pump, but could clearly be adapted as a single output one and the unloader means is a pressurised pin (19) urging a plunger (18) against a spring to close porthole (16) and stop fluid entering the piston/cylinder assembly (5) which in turn terminates delivery at fitting (11). An alternative construction is shown in Patent UK-A-1485532 in which a pressurised spool (8) cuts off flow through the centre of a cup seal (at 10a).

One object of the present invention is to provide an improved unloader capable of quieter operation and clean fluid cut-out and cut-in functions.

US-A-2,594,132 discloses an unloader for a fluid pump having an inlet fluid flow path passing through a gap defined by a resilient seal, and comprising a valve operable when the delivery pressure reaches a predetermined value, to apply the pump delivery pressure to the seal, in the sense to close the gap.

According to the present invention such an unloader is characterised in that, the seal is an annular seal, such as an O-ring seal, disposed in a groove around a cylindrical unloader body within a bore housing the body, to define an annular fluid inlet gap, the delivery pressure being applied in the groove and acting to expand the seal radially into contact with the bore. When the delivery pressure is removed, the seal contracts due to its resilience thus permitting inlet fluid to flow and load the pump.

In the preferred embodiment, the valve is operable by a plunger responsive to the pump delivery pressure and acting against a bias. It comprises a valve element preferably a ball, co-operating with a first valve seat and movable by the plunger when the delivery pressure reaches a predetermined value, to co-operate with a second valve seat and close a flow path communicating between the gap and the space behind the seal. As the valve element lifts from the second seat (when the delivery accumulator pressure falls) the delivery pressure acting behind the seal is dropped to the reservoir pressure acting in the gap so allowing the seal to contract. A predetermined differential between cut-in and cut-out pressures may be obtained by making one seat, the second seat, larger than the other.

Embodiments of the present invention will now be described by way of example, with reference to the accompanying drawings, in which :

Figure 1 is an axial section through a hydraulic pump having an unloader according to the present invention ;

Figure 2 is a cross-section taken on BB in Figure 1.

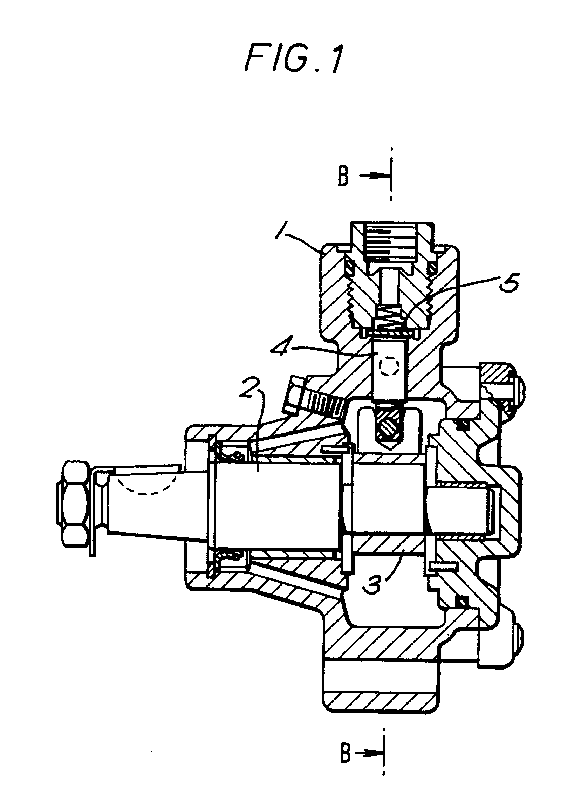

The pump shown in Figure 1 is of the same basic construction to that described in GB 1300278 (the disclosure of which is incorporated herein by reference) consisting of a body 1, a crankshaft 2, a link or connecting rod 3, a piston 4, a delivery valve disc 5, a fluid inlet port 6, a crankcase feed drilling and an unloader assembly.

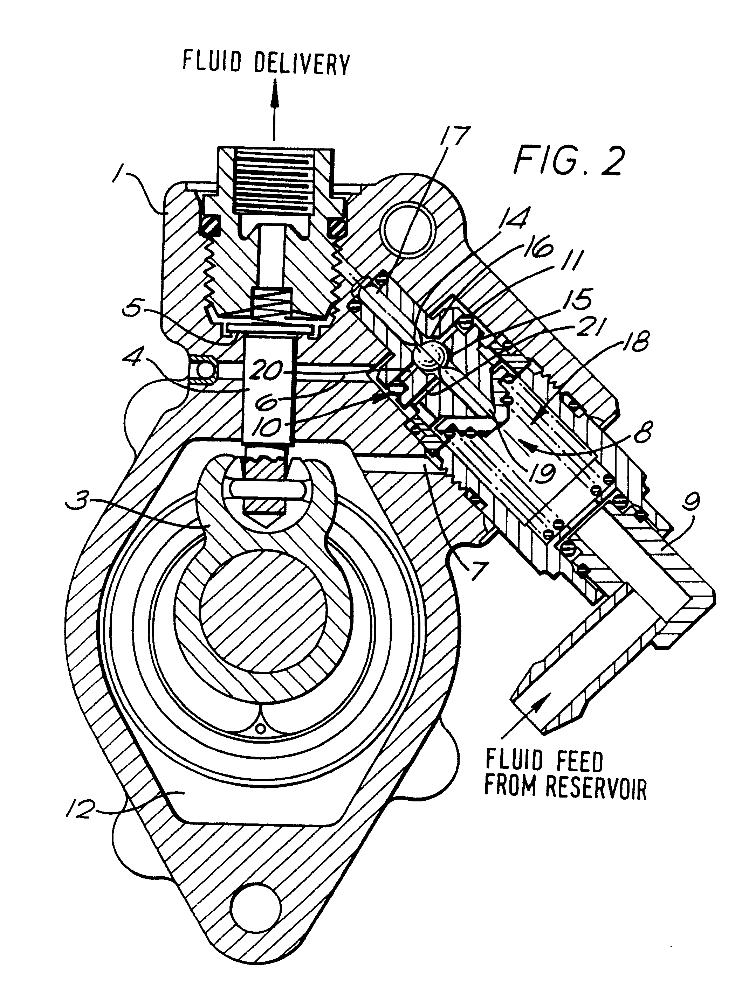

Figure 2 shows the unloader in which fluid from the system reservoir (not shown) enters the pump assembly through the elbow 9 onto the pump inlet port 6 having passed through the annulus at 10 which exists because an elastomeric seal 11 is under fitted in its bore by typically 0.5 mm. The reservoir fluid also freely enters the pump crankcase 12 through drilling 7 for lubrication purposes (if the pump is adapted as a dual circuit unit then the crankcase is fed from one input only to avoid mixing of the circuits).

The pump shown is port inlet (it could of course be valve inlet) it fills its cylinder with fluid on the down stroke and pumps the fluid at pressure on the up stroke through the plate valve 5 and onto the circuit accumulators for storage at pressure.

To illustrate operation of the unloader, the drawing of Figure 2 is split, the portion above the centreline is shown in the unloaded position (i.e. pump not delivering) and the portion below the centre line in the loaded position (i.e. pump delivering). The chamber containing a ball 14 has two seats 15 and 16, the former typically is about 0.15 mm larger in diameter than the latter.

When the delivery pressure (i.e. accumulator pressure) is below the normal circuit operating value the thrust developed by pin 17 is insufficient to prevent springs 18 from seating the ball at 16 and seal 11 takes the position shown (below the centreline) and admits fluid to the port 6. When the delivered pressure reaches the operating value it urges the ball 14 against the spring load through pin 19 onto seat 15.

Also due to controlled leakage past pin 17 the delivery pressure acts through radial holes 20 to urge seal 11 radially onto its bore thus preventing fluid passing to port 6 and terminating the pump delivery. The diametral difference between 15 and 16 is to provide a specified pressure differential between cut-in and cut-out to avoid over sensitivity. The pressure in the pump inlet and port 6 is always low so when the pump is loading and pressure 20 is released past seat 15 and along drilling 21 the elastomeric properties of seal 16 returns it radially within its fitted leakproof gap to re-open the annulus 10 and permitting fluid to port 6 and onto delivery.

The design gives a snap action in both directions to the fully open or closed positions, thereby eliminating any throttling of the inlet caused by the partial opening of conventional arrangements. This results in a quieter operating of the unloader function.

If a seal with insufficient elastomeric returning force is used, then a garter spring or other aid may be required to ensure its return.

## Claims

1. An unloader for a fluid pump having an inlet flow path passing through a gap (10) defined by a resilient seal (11) and comprising a valve (14, 15, 16) operable when the delivery pressure reaches a predetermined value to apply the pump delivery pressure to the seal (11), in the sense to close the gap (10), characterised in that the seal (11) is an annular seal disposed in a groove around a cylindrical unloader body within a bore housing the body, to define an annular fluid inlet gap (10), the delivery pressure being applied in the groove (20) and acting to expand the seal radially into contact with the bore.

2. An unloader according to claim 1 wherein the valve comprises a valve element (14) co-operating with a first valve seat (16) and movable by a plunger (17) against a bias (18) when the delivery pressure reaches a predetermined value, to co-operate with a second valve seat (15) and close a flow path (21, 15, 20) communicating between the gap (10) and a space (20) behind the seal.

3. An unloader according to claim 2 wherein the effective area of the second seat (15) is larger than of the first seat (16).

## Patentansprüche

1. Entlastungsvorrichtung für eine Fluidpumpe mit einem Einlaßströmungskanal, der durch einen von einer elastischen Dichtung (11) umgrenzten Spalt (10) hindurchgeht und ein Ventil (14, 15, 16) aufweist, das betriebsbereit ist, wenn der Förderdruck einen vorher festgelegten Wert erreicht, um den Pumpenförderdruck an die Dichtung (11) im Sinne eines Schließens des Spaltes (10) anzulegen, dadurch gekennzeichnet, daß die Dichtung (11) eine ringförmige Dichtung ist, die in einer Nut um einen zylindrischen Entlastungskörper in einer den Körper aufnehmenden Bohrung angeordnet ist, um einen ringförmigen Fluideinlaßspalt (10) zu bilden, wobei der Förderdruck in der Nut (20) anliegt und so wirkt, daß sich die Dichtung radial in Kontakt mit der Bohrung ausdehnt.

2. Entlastungsvorrichtung nach Anspruch 1, bei welcher das Ventil ein Ventilelement (14) aufweist, das mit einem ersten Ventilsitz (16) zusammenwirkt und durch einen Kolben (17) entgegen einer Vorspannung (18) bewegbar ist, wenn der Förderdruck einen neu festgelegten Wert erreicht, um mit einem zweiten Ventilsitz (15) zusammenzuwirken und einen Strömungskanal (21, 15, 20) zu schließen, der eine Verbindung zwischen dem Spalt (10) und einem Raum (20) hinter der Dichtung bildet.

3. Entlastungsvorrichtung nach Anspruch 2, bei welcher die wirksame Fläche des zweiten Sitzes (15) größer als die des ersten Sitzes (16) ist.

## Revendications

1. Dispositif de marche à vide pour pompe hydraulique ayant un trajet d'écoulement d'entrée passant à travers un espace (10) défini par un joint élastique (11) et comportant un clapet (14, 15, 16) qui peut être actionné lorsque la pression à la sortie atteint une valeur prédéterminée pour appliquer la pression à la sortie de la pompe au joint (11), dans le sens de fermeture de l'espace (10), caractérisé en ce que le joint (11) est un joint annulaire disposé dans une gorge autour d'un corps cylindrique de valve de décharge à l'intérieur d'un alésage recevant le corps, pour définir un espace annulaire (10) d'entrée de fluide, la pression à la sortie étant appliquée dans la gorge (20) et agissant pour dilater radialement le joint pour l'amener en contact avec l'alésage.

2. Dispositif selon la revendication 1 dans lequel le clapet comporte un élément de clapet (14) qui coopère avec un premier siège de clapet (16) et qui est susceptible d'être déplacé par un plongeur (17) contre une sollicitation élastique (18) lorsque la pression à la sortie atteint une valeur prédéterminée, pour coopérer avec un second siège de clapet (15) et interrompre un trajet d'écoulement (21, 15, 20) réalisant la communication entre l'espace (10) et un espace (20) derrière le joint.

3. Dispositif selon la revendication 2 dans lequel la surface efficace du second siège (15) est plus grande que celle du premier siège (16).

# FIG.1

FLUID DELIVERY

FIG. 2

FLUID FEED
FROM RESERVOIR